Europäisches Patentamt

European Patent Office

Office européen des brevets

(19)

(11) Veröffentlichungsnummer : **0 298 039 B1**

# (12) EUROPÄISCHE PATENTSCHRIFT

(45) Veröffentlichungstag der Patentschrift :
**27.05.92 Patentblatt 92/22**

(51) Int. Cl.$^5$ : **B01D 53/34**

(21) Anmeldenummer : **88810442.9**

(22) Anmeldetag : **24.06.88**

(54) **Verfahren und Vorrichtung zur Abscheidung von Schwefeldioxid aus Gasen, insbesondere aus Rauchgasen.**

Die Akte enthält technische Angaben, die nach dem Eingang der Anmeldung eingereicht wurden und die nicht in dieserPatentschrift enthalten sind.

(30) Priorität : **29.06.87 CH 2440/87**

(43) Veröffentlichungstag der Anmeldung :
**04.01.89 Patentblatt 89/01**

(45) Bekanntmachung des Hinweises auf die Patenterteilung :
**27.05.92 Patentblatt 92/22**

(84) Benannte Vertragsstaaten :
**AT BE CH DE ES FR GB GR IT LI LU NL SE**

(56) Entgegenhaltungen :
**EP-A- 0 162 536**
**EP-A- 0 172 375**
**DE-A- 3 136 155**
**DE-A- 3 312 388**
**GB-A- 2 131 486**

(73) Patentinhaber : **FÜLLEMANN PATENT AG**
**Lindenhof**
**CH-7303 Mastrils (CH)**

(72) Erfinder : **Füllemann, Jörg**
**Obere Häuser**
**CH-7302 Mastrils (CH)**

(74) Vertreter : **Riederer, Conrad A., Dr.**
**Bahnhofstrasse 10**
**CH-7310 Bad Ragaz (CH)**

**Beschreibung**

Die Erfindung betrifft ein Verfahren zum Abscheiden von Schwefeldioxid aus Gas, insbesondere aus Rauchgasen, mittels einer in einer Waschvorrichtung im Kreislauf geführten Waschflüssigkeit, wobei Feststoffpartikel stetig weiter mit der Waschflüssigkeit umgewälzt werden und die Waschflüssigkeit in der Waschvorrichtung unter Zugabe von gelöschtem oder ungelöschtem Kalk etwa im ph-Bereich von 6 bis 6,8 und auf einer Temperatur von weniger als 60° C gehalten wird.

In der EP-A 0 118 017 wird eine Vorrichtung zur Reinigung der Abgase von Feuerungsanlagen beschrieben, die mit Mitteln zur Erzeugung eines Sprühregens und einem Wärmetauscher versehen ist. In dieser Vorrichtung wird eine Reinigungsflüssigkeit zur Erzeugung eines Sprühregens umgewälzt. Ein Ventil ist vorgesehen, um der Flüssigkeit ein Neutralisationsmittel, z.B. Soda, beizumischen. Zusammen mit dem in den Rauchgasen mitgeführten Schwefeldioxid bildet sich in der Flüssigkeit Sulfat, das einen schlammartigen Niederschlag verursacht. Dieser wird dann vom Boden des Absetzbeckens abgesogen und in einem Trocknungsbehälter getrocknet und von Zeit zu Zeit entnommen. Um ein Verwirbeln der abgesetzten Stoffe durch eine in das Bad eintauchende Welle zu verhindern, ist im Absetzbecken eine Abschirmwand vorgesehen. Dies genügt allerdings nicht, um zu verhindern, dass in der Flüssigkeit entstehende Feststoffpartikel zusammen mit der Flüssigkeit umgewälzt werden. Es handelt sich dabei jedoch um relativ kleine Feststoffpartikel und gewichtsmässig kleine Mengen. Relativ grosse Feststoffpartikel setzen sich ab.

Es hat sich nun gezeigt, dass bei der Verwendung von Erdalkaliverbindungen als Neutralisationsmittel erhebliche Verkrustungen auftreten können, welche nach relativ kurzer Zeit die Funktion der Rauchgaswaschanlage beeinträchtigen.

In einem Artikel gemäss ETH-Katalog Nr. B 18 655: 1979/2 wird darauf hingewiesen, dass bei der Rauchgasreinigung der pH-Wert eine zentrale Rolle spielt. Für die Auswaschung von $SO_2$ wären eigentlich stark alkalische Lösungen am besten geeignet. Nun ergibt sich aber, dass bei einem pH-Wert von mehr als 8 die Aufnahme des in den Rauchgasen weit im Ueberschuss vorhandenen $CO_2$ unerwünscht stark zunimmt, so dass ein grosser Verbrauch an Neutralisationsmittel entsteht. In der zitierten Literaturstelle wird daher als günstigster Bereich zur $SO_2$-Absorption ein pH-Wert von 5 bis 7,5 erwähnt. Auf Seite 16 der zitierten Literaturstelle heisst es dann, dass die direkte Absorption von $SO_2$ mit Erdalkaliverbindungen ($Ca(OH)_2$, $CaCO_3$, $Mg(OH)_2$) mit erheblichen Problemen verbunden ist. Man hat es namlich fast ausschliesslich mit Suspensionen zu tun, wodurch eine erhebliche Verkrustungsgefahr besteht, die auch das schwerwiegendste Problem der ersten Verfahrensgeneration auf diesem Gebiet darstellt. Auf Seite 17 der zitierten Literaturstelle wird dann die Verkrustungsgefahr bei der Verwendung von Kalk als Neutralisationsmittel als stark bezeichnet und die Gegenstromabsorption als unmöglich betrachtet. Vom Abscheidegrad heisst es, dass er lediglich bis 90 Prozent betrage. Als Vorteil wird jedoch hervorgehoben, dass Erdalkaliabsorbentien einen niedrigen Preis haben und dass die resultierenden Endprodukte entweder deponierbar oder sogar verkäuflich sind.

Beim Attisholz-Sulzer-Recyclingverfahren (Technische Rundschau Sulzer 1/1987, S. 22) wird als Absorptionsflüssigkeit eine Suspension von Calziumkarbonat und Waschwasser verwendet. Diese Suspension wird zum Kolonnenkopf gepumpt und rieselt im Gegenstrom zum Rauchgas über die Kolonnenpackung. Das Calziumkarbonat wird dabei mit dem Schwefeldioxid zu Calziumsulfit und teilweise zu wasserlöslichem Calziumbisulfit umgesetzt. Die Sulfitbildung in der Absorptionskolonne führt zu einer zunehmenden Verkrustung der Kolonnenpackung. Dies hat den Nachteil, dass ein kontinuierlicher Betrieb der Anlage nur dann möglich ist, wenn zwei Absorptionskolonnen vorhanden sind. Dies ermöglicht es, wenn eine Kolonne in Betrieb ist, die andere Kolonne zu spülen. Eine Kolonne kann etwa 100 Stunden in Betrieb bleiben, bis sie gespült werden muss.

Die DE-A-33 12 388 beschreibt ein zweistufiges Verfahren zur Gipsgewinnung bei der Abgasentschwefelung im Nass-Kalk-Gips-Verfahren, wobei Gips sekundär erzeugt wird. Zu diesem Zweck wird das $SO_2$ enthaltende Abgas in einer eine Absorptionssäule aufweisenden Stufe mit einer Suspension in Berührung gebracht, die Calziumcarbonat und/oder Calziumhydroxid enthält. Anschliessend wird in einer eine Oxidationssäule aufweisenden zweiten Stufe eine Oxidation des in der Absorptionssäule erzeugten Calziumsulfits mit einem Sauerstoffgas durchgeführt. Die Suspension wird in der Oxidationssäule auf eine Temperatur von mehr als 60° C und einen pH-Wert von 6,5 oder mehr eingestellt. Dazu wird in der Literaturstelle bemerkt, dass bei einer Temperatur von 60° C oder weniger das Calciumsulfit nicht oxidiert werden könne, es sei denn in einer sauren Atmosphäre, wie es üblich sei. Die in der Oxidationssäule entstehenden Gipskristalle werden gesammelt und die Suspension wird ohne den Gips in die Absorptionssäule zurückgeführt. In der zitierten Druckschrift wird darauf hingewiesen, dass Calciumcarbonat, Calciumhydroxid und Calciumsulfit in der Kristallmorphologie abweichend von Gipskristall sind und auch eine geringere Korngrösse als Gipskristall aufweisen und daher durch Ausnutzung der unterschiedlichen Absetzgeschwindigkeiten oder duch Siebe getrennt werden können. Ueber die bei der Verwendung von Kalk normalerweise auftretenden Verkrustungsprobleme und deren Behebung macht die zitierte Druckschrift keine Angaben, ebensowenig über die Art, wie die Suspension in der Absorptionssäule oder Oxidationssäule in Kontakt mit dem zu reinigenden Abgas gebracht wird. Als nachteilig erweist sich, dass das Verfahren zweistufig ist, also nebst einer Absorptionssäule noch eine Oxidationssäule benötigt.

Es ist Aufgabe der vorliegenden Erfindung, ein Verfahren der eingangs erwähnten Art zu schaffen, bei dem in einer Waschvorrichtung zwar Erdalkaliverbindungen als Neutralisationsmittel verwendet werden können, aber keine störenden Verkrustungen auftreten. Gemäss der Erfindung wird dies durch die kennzeichnenden Merkmale von Patentanspruch 1 erreicht. Wie aus der DE-A-33 12 388 bekannt ist, wird bei einer Temperatur von 60° C oder weniger und einem pH-Wert von 6,5 oder mehr Calciumsulfit nicht oxidiert. Da nun aber, wie die später beschriebene Analyse des Schlamms zeigt, dieser mehr als doppelt soviel Calziumsulfat als Calziumsulfit enthält, wird offensichtlich durch das erfindungsgemässe Verfahren auch ohne speziellen Oxidationsturm eine Oxidation erreicht.

Die Verwendung eines Lüfters hat auch den Vorteil, dass die gereinigten Rauchgase nicht nachträglich wieder aufgewärmt werden müssen, um sie durch einen Kaminzug abzuführen.

Beim erfindungsgemässen Verfahren werden auch relativ grosse Feststoffpartikel umgewälzt. Dies hat den Effekt, dass Verkrustungen vermieden oder bestehende Verkrustungen sogar wieder abgebaut werden. Bei der Umwälzung wachsen die Feststoffpartikel, bis sie eine Grösse erreichen, bei der sie zwangsläufig ausgefällt werden. Das körnige Sediment hat im Gegensatz zu einem schlammigen Sediment den Vorteil, dass es sich sehr gut entwässern lässt.

Es hat sich zur Reduktion des Absorptionsmittelverbrauchs als vorteilhaft erwiesen, dafür zu sorgen, dass das zu behandelnde Gas wenig Sauerstoff enthält. Zu diesem Zweck wird der Brenner der Heizungsanlage mit einem nur geringen Luftüberschuss gefahren. Auch sollte dafür gesorgt werden, dass nach dem Verbrennungsvorgang nicht durch irgendwelche Lecks Luft dem zu reinigenden Rauchgas beigemengt wird. Wenn das zu behandelnde Gas praktisch keinen Sauerstoff enthält, bilden sich in der Waschflüssigkeit vermehrt Sulfite statt Sulfate. Dies macht sich durch eine milchige Verfärbung der Waschflüssigkeit bemerkbar. Es hat sich gezeigt, dass unter diesen Umständen der Bedarf an der Bedarf an Neutralisationsmitteln kleiner wird und sich trotzdem keine Ablagerungen bilden.

Zweckmässigerweise wird wenigstens in einem Teilbereich der Waschvorrichtung die Waschflüssigkeit in Bewegung gesetzt, um durch die so entstehende Turbulenz ein Absetzen der Feststoffpartikel, insbesondere der relativ grossen, zu verhindern bzw. nach einem Stillstand der Waschvorrichtung abgesetzte Feststoffpartikel wieder aufzuwirbeln. Dadurch wird sicher gestellt, dass die im Kreislauf geführte Waschflüssigkeit ständig einen hohen Anteil von Feststoffpartikeln mit sich führt.

Vorteilhaft wird die Waschflüssigkeit im pH-Bereich von 5 bis 6,8 gehalten. Versuche haben gezeigt, dass im Gegensatz zu den Ausführungen im eingangs erwähnten Artikel, bereits bei einem pH-Wert von 6,8 relativ viel $CO_2$ abgeschieden wird, was dann zur Bildung von Calziumkarbonat führt. Als besonders vorteilhaft erweist sich die Durchführung des Verfahrens im pH-Bereich von 6 bis 6,5. Bei relativ tiefen Temperaturen der Waschflüssigkeit ist die Selbstreinigung effektiver. Vorteilhaft wird daher die Waschflüssigkeit auf einer Temperatur unter 60° C gehalten. Als besonders vorteilhaft erweist sich ein Temperaturbereich von etwa 0 bis 40° C. In der Regel werden aber bei Heizanlagen im Betrieb Temperaturen unter 35° C kaum erreicht, es sei denn, man verwende z.B. die Waschflüssigkeit auch noch zur Vorerwärmung von Brauchwasser oder sehe eine zusätzliche Kühlung vor, z.B. durch einen Wärmetauscher im Freien oder im Erdboden.

Vorteilhaft wird dem Waschwasser als Erdalkaliverbindung gelöschter oder ungelöschter Kalk beigegeben. Es handelt sich dabei um ein sehr biliges Absorptionsmittel, und das anfallende Endprodukt ist deponierbar oder sogar verkäuflich.

Es ist zweckmässig, wenn bei der ersten Inbetriebsetzung der Waschanlage die Waschflüssigkeit mit Sedimenten aus einer anderen Waschanlage geimpft wird. Auf diese Weise kann vermieden werden, dass sich zuerst Verkrustungen bilden. Wenn Verkrustungen am pH-Sensor vermieden werden, ergeben sich keine Störungen bei den angezeigten pH-Werten. Dies wiederum stellt sicher, dass die Anlage schon nach kurzer Zeit einwandfrei läuft.

Die Erfindung betrifft auch eine Vorrichtung zur Durchführung des Verfahrens. Diese Vorrichtung wird in Anspruch 7 definiert.

Zum Abkühlen des Waschwassers unter die Vorlauftemperatur kann ein zusätzlicher Wärmetauscher z.B. zum Aufwärmen von Brauchwasser vorgesehen werden.

Zweckmässigerweise besitzt die Vorrichtung ein praktisch gasdichtes Gehäuse. Dies hat den Vorteil, dass eine unerwünschte Luftzufuhr verhindert wird. Dies ist besonders dann von Interesse, wenn eine hohe Sulfitbildung erwünscht ist.

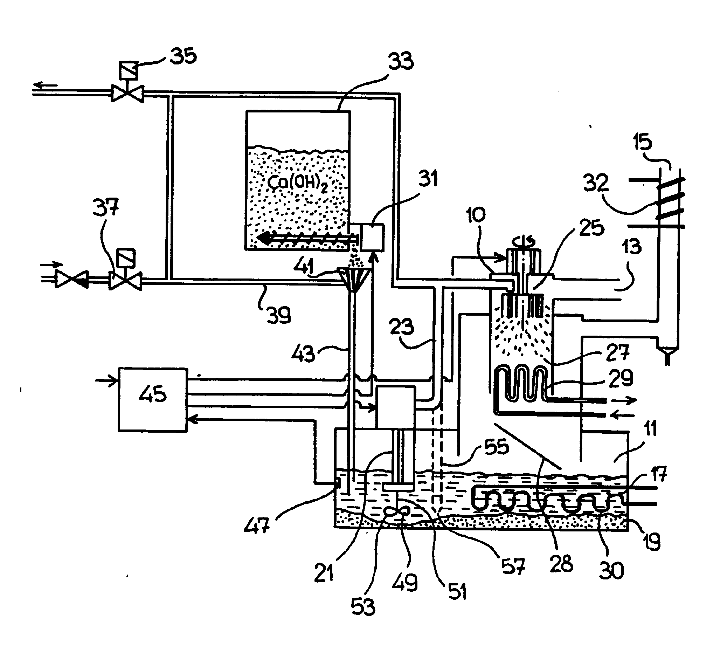

Ausführungsbeispiele der Erfindung werden nun unter Bezugnahme auf die Zeichnung beschrieben.

Die Waschvorrichtung weist ein praktisch gasdichtes Gehäuse 10 auf, dessen unterer Teil einen Behälter

EP 0 298 039 B1

11 für die Waschflüssigkeit bildet. Das Gehäuse 10 besitzt einen Abgaseinlass 13 und einen Abgasauslass 15. Der Behalter 11 dient sowohl als Vorratsbehälter für die Waschflüssigkeit 17 als auch als Aufnahmebehälter für das bei der Reinigung anfallende feste Endprodukt 19. Eine Tauchpumpe 21 dient der Umwälzung der Waschflussigkeit. Es kann sich dabei um eine relativ langsam laufende Pumpe handeln, so dass kaum eine Erosionsgefahr wegen der in der Waschflüssigkeit vorhandenen Feststoffpartikel besteht. Die Waschflüssigkeit wird von der Pumpe 21 über die Leitung 23 zur Spruheinrichtung 25 geführt und dort zersprüht. Im Raum 27 findet eine innige Vermischung des Sprühregens mit dem zu reinigenden Abgas statt. Im Raum 27 befindet sich ein Wärmetauscher 29. Durch diesen Wärmetauscher 29 kann beispielsweise Rücklaufwasser der Heizanlage strömen, bevor es wieder dem Heizkessel zugeführt wird. Es kann ein zusätzlicher Wärmetauscher 30 zum Abkühlen der Waschflüssigkeit vorgesehen werden. Ein Wärmetauscher 32 kann auch zur Abkühlung der Rauchgase dienen. Mit diesen Wärmetauschern kann z.B. Brauchwasser vorgewärmt werden. Ueber eine Dosiervorrichtung 31 kann aus dem Dosierbehälter 33 das Absorptionsmittel bei Bedarf der Waschflüssigkeit im Behalter 11 zugeführt werden. Das Ventil 35 dient der Probenentnahme und das Ventil 37 der Frischwasserzufuhr. Die Leitung 39 dient dazu, Absorptionsmittel aus dem Becher 41 über die Leitung 43 in den Behälter 11 zu spülen.

Die Steuerung 45 sorgt für die Inbetriebsetzung der Pumpe 21 und der Sprühvorrichtung 25, wenn der Brenner läuft. Die pH-Sonde 47 stellt fest, ob die Waschflüssigkeit 17 den gewünschten pH-Wert aufweist. Sinkt der pH-Wert unter eine vorbestimmte Grenze, so setzt die Steuerung 45 die Dosiereinrichtung 31 in Betrieb.

Für weitere Details einer Reinigungsvorrichtung dieser Art wird auf das europäische Patent 0 172 375 verwiesen.

Unterhalb des Raumes 27 ist ein Umlenkblech 28 vorgesehen werden, welches das Wasser des Sprühregens sammelt und derart in den Wasserbehälter 11 lenkt, dass ein Aufwirbeln und Umwälzen von Feststoffpartikeln erfolgt.

Zusätzlich kann im Waschflussigkeitsbehälter 11 eine weitere Vorrichtung 49 zum Aufwirbeln und Umwälzen von Feststoffpartikeln vorgesehen sein. Beim gezeigten Ausführungsbeispiel besteht diese Vorrichtung zum Aufwirbeln und Umwälzen von Feststoffpartikeln aus einer Verlängerung 51 des Rotors der Tauchpumpe 21 und einem an der Verlängerung 51 angeordneten Rührer 53, z.B. einem Impeller oder Propeller. Es wäre aber auch möglich, einen Rührer 53 anderswo im Waschmittelbehälter 11 zu plazieren und / oder langsamer als die Pumpe 21 laufen zu lassen. Im letzteren Fall wäre allerdings ein Untersetzungsgetriebe oder eine separate Antriebseinheit zum Antrieb des Rührers erforderlich. Aufgabe des Rührers 53 ist es, im Betrieb der Waschvorrichtung ein Absetzen von Feststoffpartikeln möglichst zu verhindern, bzw. nach einem Stillstand der Waschvorrichtung abgesetzte Feststoffpartikel wieder aufzuwirbeln. Der Rührer kann aber auch ständig im Betrieb gehalten werden, um ein Zusammenpappen der Feststoffpartikeln bei langen Standzeiten des Brenners und der Vorrichtung zu vermeiden. Das Mitführen von Feststoffpartikeln in der Flüssigkeit verhindert Verkrustungen. Von besonderer Bedeutung ist die Verhinderung von Verkrustungen am pH-Fühler 47, weil dieser sonst in seiner Funktion gestört wird.

## Versuch I

Mit einer Anlage der beschriebenen Art, jedoch ohne Vorrichtung 49, wurde die im Waschkreislauf befindliche Waschflüssigkeit ständig filtriert. Man hoffte, damit Verkrustungen vermeiden zu können. Interessanterweise stellte sich aber heraus, dass je klarer die Flüssigkeit war, d.h. je besser die Waschflüssigkeit von den Feststoffen gereinigt wurde, desto rascher eine Verkrustung eintrat. Bereits nach zehn Stunden war eine Kristallisationsschicht auf dem Wärmetauscher 29 sichtbar.

## Versuch II

Bei diesem Versuch wurde ein Rührer 53 an einer Verlängerung 51 des Tauchpumpenrotors befestigt, um viele Feststoffe aufzuwirbeln und in den Kreislauf einzuführen. Dabei zeigte sich, dass die beim vorherigen Versuch verschmutzen Wärmetauscherflächen und andere Anlageteile im Reinigungsbehälter schon nach wenigen Stunden wieder blank waren.

Es ist nicht völlig klar, wie der durch Versuch II festgestellte Reinigungseffekt und die Verhinderung von Ablagerungen zu erklären ist. Eine mögliche Erklärung ist folgende:

Bei der Verwendung von Calziumhydroxyd als Absorptionsmittel entstehen durch die Bindung von Schwefeldioxid ungelöste und gelöste Salze. Wenn nun diese Salze gezwungenermassen im Kreislauf zirkulieren, werden die einzelnen Kristalle immer grösser. Dies dürfte denn auch der entscheidende Faktor sein, der Verkrustungen verhindert. Es scheint, dass durch das Mitführen dieser Kristalle ein Prozess in Gang gesetzt wird,

4

welcher verhindert, dass sich eine Kristallisationsschicht am Wärmetauscher oder an Anlageteilen ablagert. Die im Umlauf befindlichen Kristalle reagieren an also an ihrer Oberfläche mit der Waschflüssigkeit und wachsen dabei, bis sie eine Grösse erreichen, bei der sie zwangsläufig ausgefällt werden. Möglicherweise werden dabei auch kleine Kristalle aufgelöst.

Die geschilderten Versuche wurden bei Temperaturen der Waschflüssigkeit im Bereich von 35 bis 40° C durchgeführt. Wurde die Temperatur erhöht, so verzögerte sich die Auflösung bereits vorhandener Ablagerungen.

Es wurde auch festgestellt, dass der günstigste pH-Bereich bei Werten von 6 bis 6,5 liegt. Bei Werten von unter 5 ist die Reinigungswirkung zu gering und bei Werten über 6,8 nimmt die Absorbierung von Kohlendioxyd unerwünscht stark zu.

Weiter wurde festgestellt, dass wenn das zu behandelnde Gas kein oder nur wenig Sauerstoff enthält, sich in der Waschflüssigkeit Sulfite bilden. Diese Sulfite machen sich durch eine milchige Verfärbung der Waschflüssigkeit bemerkbar. Diese milchige Verfärbung lässt darauf schliessen, dass bei Sulfiten die Partikelgrösse sehr klein ist.

Eine Untersuchung des in der Anlage entnommenen Schlamms zeigt folgendes Ergebnis:

| Trockenrückstand bis 105°C | : 290 g/kg |
| Wassergehalt | : 710 g/kg |
| Calziumcarbonat ($CaCO_3$) | : 27,5 g/kg |
| Calziumsulfit ($CaSO_3$) | : 53,6 g/kg |
| Calziumsulfat ($CaSO_4$) | : 126,0 g/kg |
| Calziumnitrit ($Ca(NO_2)_2$) | : 0,032 mg/kg |
| Calziumnitrat ($Ca(NO_3)_2$) | : 0,77 mg/kg |
| Spez. Gewicht | : 1,275 kg/l |

Es ist vorher erwähnt worden, dass verschiedene Parameter das Verfahren beeinflussen, so der pH-Wert, die Temperatur und das Fehlen oder die Anwesenheit von Luftsauersauerstoff. Von Interesse ist die bei Abwesenheit oder Mangel an Sauerstoff auftretende Sulfitbildung. Bei der Bildung von Bisulfit sinkt der Verbrauch vom Absorptionsmittel, und es fallen weniger Feststoffe an, die entsorgt werden müssen. Beim Bisulfit bindet nämlich ein Metallatom doppelt so viele Schwefelatome wie beim Sulfat. Es wird auch vermutet, dass das gelöste Bisulfit als Lösungsvermittler zur Auflösung von Ablagerungen dient.

Als weitere Variante der Erfindung kann ein zusätzliches Aufwirbeln von Feststoffpartikeln auch dadurch erreicht werden, dass von der Druckseite der Pumpe 21 her eine Leitung 55 zu einer Düse 57 im Behälter 11 führt, wobei dann der aus der Düse austretende Teilstrom ein Absetzen von Feststoffpartikeln verhindert, bzw. abgesetzte Feststoffpartikel wieder aufwirbelt.


## Patentansprüche

1. Verfahren zum Abscheiden von Schwefeldioxid aus Gas, insbesondere aus Rauchgasen, mittels einer in einer Waschvorrichtung im Kreislauf geführten Waschflüssigkeit, wobei Feststoffpartikel stetig weiter mit der Waschflüssigkeit umgewälzt werden und die Waschflüssigkeit in der Waschvorrichtung unter Zugabe von gelöschtem oder ungelöschtem Kalk etwa im pH-Bereich von 6 bis 6,8 und auf einer Temperatur von weniger als 60° C gehalten wird, dadurch gekennzeichnet, dass die Waschflüssigkeit zur Erzeugung eines Sprühregens in der Waschvorrichtung mittels eines Lüfters zersprüht wird, das Gas:mit dem Sprühregen vermischt und durch den Lüfter in der Waschvorrichtung rezirkuliert wird, um eine innige Vermischung des Sprühregens mit dem Gas zu bewirken.

2. Verfahren nach Anspruch 1, dadurch gekennzeichnet, dass dafür Sorge getragen wird, dass das zu behandelnde Abgas nur wenig Sauerstoff enthält.

3. Verfahren nach Anspruch 1 oder 2, dadurch gekennzeichnet, dass wenigstens in einem Teilbereich der Waschvorrichtung die Waschflüssigkeit in Bewegung gesetzt wird, um ein Absetzen von Feststoffpartikeln zu verhindern bzw. nach einem Stillstand der Waschvorrichtung abgesetzte Feststoffpartikel wieder aufzuwirbeln.

4. Verfahren nach einem der Ansprüche 1 bis 3, dadurch gekennzeichnet, dass die Waschflüssigkeit im pH-Bereich von 6 bis 6,5 und auf einer Temperatur von etwa 0 bis 40° C gehalten wird.

5. Verfahren nach einem der Ansprüche 1 bis 4, dadurch gekennzeichnet, dass bei der ersten Inbetriebsetzung die Waschflüssigkeit mit Sedimenten aus einer anderen Waschanlage geimpft wird.

6. Verfahren nach einem der Ansprüche 1 bis 5, dadurch gekennzeichnet, dass mittels eines Wärmetauschers die Waschflüssigkeit durch das Rücklaufwasser einer Heizungsanlage auf einer relativ tiefen Temperatur gehalten wird, bzw. das Rücklaufwasser vorgewärmt wird, bevor es in den Kessel der Heizungsanlage gelangt.

7. Vorrichtung zur Durchführung des Verfahrens nach einem der Ansprüche 1 bis 6, mit Mitteln (25) zur Erzeugung eines Sprühregens, einer Pumpe (21) zur Förderung der Waschflüssigkeit für die Erzeugung des Sprühregens, einem Waschflüssigkeitsbehälter (11) zur Aufnahme eines Vorrats an Waschflüssigkeit, einer Vorrichtung zum Aufwirbeln und Umwälzen von Feststoffpartikeln, dadurch gekennzeichnet, dass die Vorrichtung zur Erzeugung des Sprühregens ein Lüfter (25) ist und dass als Vorrichtung zum Aufwirbeln und Umwälzen ein Umlenkblech (28) vorgesehen ist, welches das Wasser des Sprühregens sammelt und so in den Waschflüssigkeitsbehälter (11) lenkt, dass ein Aufwirbeln und Umwälzen von Feststoffpartikeln erfolgt.

8. Vorrichtung nach Anspruch 7, dadurch gekennzeichnet, dass sie einen mit Rücklaufwasser der Heizungsanlage beschickten Wärmetauscher (29) aufweist, der dem Sprühregen ausgesetzt ist.

9. Vorrichtung nach Anspruch 8, dadurch gekennzeichnet, dass zum Abkühlen des Waschwassers unter die Vorlauftemperatur ein zusätzlicher Wärmetauscher (30), z.B. zum Aufwärmen von Brauchwasser vorgesehen ist.

10. Vorrichtung nach einem der Ansprüche 7 bis 9, dadurch gekennzeichnet, dass sie ein praktisch gasdichtes Gehäuse (10) aufweist.

## Claims

1. A method of separating sulphur dioxide from gas, more particularly from flue gases, by means of a washing liquid circulated in a washing device, solid particles being continuously circulated with the washing liquid and the washing liquid being kept at a temperature of less than 6Ø°C and substantially in a pH range from 6 to 6.8 by the addition of slaked or unslaked lime, characterised in that the washing liquid is sprayed by means of a fan in order to produce a fine rain in the washing device, and the gas is mixed with the fine rain and recirculated in the washing device by means of the fan to effect intimate mixing of the fine rain and the gas.

2. A method according to claim 1, characterised in that care is taken to ensure that the flue gas for treatment contains only little oxygen.

3. A method according to claim 1 or 2, characterised in that the washing liquid is set in motion at least in a partial zone of the washing device in order to prevent deposition of solid particles and re-fluidise deposited solid particles after stoppage of the washing device.

4. A method according to any one of claims 1 to 3, characterised in that the washing liquid is kept in the pH range of from 6 to 6.5 and at a temperature of about Ø to 4Ø°C.

5. A method according to any one of claims 1 to 4, characterised in that on the first commissioning the washing liquid is inoculated with sediments from another washing plant.

6. A method according to any one of claims 1 to 5, characterised in that by means of a heat-exchanger the washing liquid is kept at a relatively low temperature by the return water from a heating plant, or the return water is pre-heated before entering the boiler of the heating plant.

7. Apparatus for performing the method according to any one of claims 1 to 6, comprising means (25) for generating a fine rain, a pump (21) for conveying the washing liquid for generating the fine rain, a washing liquid tank (11) to receive a supply of washing liquid, a device for fluidising and circulating solid particles, characterised in that the device for generating the fine rain is a fan (25) and in that the fluidising and circulating device is a baffle plate (28) which collects the water from the fine rain and so deflects it into the washing liquid tank (11) as to effect fluidisation and circulation of solid particles.

8. Apparatus according to claim 7, characterised in that it comprises a heat-exchanger (29) which is fed with return water from the heating plant and which is exposed to the fine rain.

9. Apparatus according to claim 8, characterised in that an additional heat exchanger (3Ø) is provided to cool the washing water to below the flow temperature, e.g. for heating up service water.

1Ø. Apparatus according to any one of claims 7 to 9, characterised in that it comprises a practically gas-tight housing (1Ø).

## Revendications

1. Procédé de séparation d'anhydride sulfureux contenu dans des gaz, en particulier dans des gaz de fumée, au moyen d'un liquide de lavage circulant en circuit fermé dans un dispositif de lavage, les particules de matière solide étant constamment remises en circulation avec le liquide de lavage et le liquide de lavage étant maintenu dans le dispositif de lavage, avec addition de chaux éteinte ou vive, à un pH dans la gamme de 6 à 6,8 environ et à une température de moins de 60°C, caractérisé en ce que le liquide de lavage est pulvérisé au moyen d'un ventilateur dans le dispositif de lavage pour la formation d'une pluie fine, le gaz est mélangé à la pluie fine et remis en circulation par le ventilateur dans le dispositif de lavage, afin de produire un mélange intime de la pluie fine avec le gaz.

2. Procédé selon la revendication 1, caractérisé en ce qu'on veille à ce que les gaz résiduaires à traiter ne contiennent que peu d'oxygène.

3. Procédé selon la revendication 1 ou 2, caractérisé en ce que le liquide de lavage est mis en mouvement, au moins dans une région partielle du dispositif de lavage, afin d'empêcher un dépôt de particules de matière solide ou de soulever de nouveau en tourbillons les particules de matière solide déposées à la suite d'un arrêt du dispositif de lavage.

4. Procédé selon l'une quelconque des revendications 1 à 3, caractérisé en ce que le liquide de lavage est maintenu dans la gamme de pH de 6 à 6,5 et à une température d'environ 0 à 40°C.

5. Procédé selon l'une quelconque des revendications 1 à 4, caractérisé en ce que lors de la première mise en service, le liquide de lavage est ensemencé de sédiments provenant d'une autre installation de lavage.

6. Procédé selon l'une quelconque des revendications 1 à 5, caractérisé en ce qu'au moyen d'un échangeur de chaleur, le liquide de lavage est maintenu à une température relativement basse par l'eau de retour d'une installation de chauffage, c'est-à-dire que l'eau de retour est pré-chauffée avant qu'elle ne parvienne dans la chaudière de l'installation de chauffage.

7. Dispositif pour l'exécution du procédé selon l'une quelconque des revendications 1 à 6, comportant des moyens (25) pour produire une pluie fine, une pompe (21) pour refouler le liquide de lavage en vue de la production de la pluie fine, un récipient de liquide de lavage (11) destiné à contenir une réserve de liquide de lavage, et un dispositif pour faire tourbillonner et faire circuler les particules de matière solide, caractérisé en ce que le dispositif pour produire la pluie fine est un ventilateur (25) et en ce qu'il est prévu, en tant que dispositif de tourbillonnement et de circulation, une tôle déflectrice (28) qui recueille l'eau de la pluie fine et la dévie dans le récipient de liquide de lavage (11) de sorte qu'il se produise un tourbillonnement et une circulation des particules solides.

8. Dispositif selon la revendication 7, caractérisé en ce qu'il comporte un échangeur de chaleur (29) qui est chargé avec de l'eau de retour de l'installation de chauffage et qui est exposé à la pluie fine.

9. Dispositif selon la revendication 8, caractérisé en ce qu'il est prévu, pour le refroidissement de l'eau de lavage au-dessous de la température aller, un échangeur de chaleur supplémentaire (30), servant par exemple au réchauffement d'eau industrielle.

10. Dispositif selon l'une quelconque des revendications 7 à 9, caractérisé en ce qu'il présente une enveloppe (10) pratiquement étanche aux gaz.

Co(OH)$_2$